# EUROPEAN PATENT SPECIFICATION

(11) **EP 1 338 495 B1**
(45) Date of publication and mention of the grant of the patent: **23.07.2008**
(21) Application number: 03251125.5
(22) Date of filing: 25.02.2003
(51) Int. Cl.: B62D 49/06, A01G 3/00, A01G 23/093, B62D 55/075

(54) **A track laying wood chipper, shredder or combined chipper and shredder**
Raupenfahrzeug zum Zerspannen, Zerkleinern von Holz oder kombiniertes Raupenfahrzeug zum Zerspannen und Zerkleinern
Hachoir, broyeur à bois sur chenille ou hachoir et broyeur combinés sur chenille

(30) Priority: 26.02.2002 GB 0204518
(43) Date of publication of application: 27.08.2003
(73) Proprietor: TURNER DEVELOPMENT LIMITED, Alcester, Warwickshire B49 5QG (GB)
(72) Inventor: Turner, Anthony, Alcester, Warwickshire B49 5QG (GB)
(74) Representative: Croston, David

(56) References cited:
- WO-A-92/10390
- FR-A- 2 678 888
- JP-A- 2000 335 457
- US-B1- 6 311 795

## Description

The present invention relates to a track driven wood chipper, shredder or combination chipper/shredder.

Track driven chippers and shredders are known and are particularly useful in areas where access by a conventional trailer hitched chipper or shredder would be difficult in view of the lack of the access to road vehicles. Landscaped parks and forestry areas can present problems of access to conventional trailer hitched chippers and shredders. The track driven chipper/shredder is advantageous in such situations since the cut wood does not have to be transported from the cutting site. By driving the track driven chipper/shredder to the cutting site, chipping and/or shredding can be performed on site.

In one known track driven wood chipper/shredder, the track laying assemblies on either side of the chipper body are slidably mounted on horizontal rails. A hydraulic ram is provided which can urge the tracks outwardly relative to the body on the horizontal rails in order to provide additional lateral stability to the chipper/shredder when the chipper is arranged on sloping ground. In the case of that chipper/shredder, the machine is driven on its tracks to the relevant site or upon reaching sloping terrain the tracks can be actuated outwardly by the hydraulic ram so as to provide the necessary stability. That arrangement has certain drawbacks. In particular, the arrangement of the track laying assemblies with the hydraulic ram and the horizontal rails beneath the body limits the ground clearance of the chipper/shredder which is disadvantageous when it is desired to traverse rough and uneven ground.

In WO92/10390, a device in vehicles is disclosed which comprises a chassis and pivot arms carrying wheels which are pivotable in vertical planes relative to the chassis to increase ground clearance. Also, means is provided to change the tread gauge of the vehicle.

It is an object of the present invention to provide an improved wood chipper, shredder or combination chipper/shredder.

According to the invention there is provided a wood chipper, shredder for brushwood or combined wood chipper and shredder for brushwood having a body, a first track laying assembly and a second track laying assembly spaced apart from the first track laying assembly in a direction transverse to the running direction of the track to define a track distance, each track laying assembly being carried by a respective arm, the arms being moveably mounted to the body and actuation means for moving the respective arms so as to move the respective track laying assemblies relative to the body, the movement of the assemblies relative to the body being such that the ground clearance of the body and the track distance between the track laying assemblies are adjustable, characterised in that each arm is arranged relative to a notional horizontal plane of the body at a fixed angle in a range of 10-60 degrees relative to the notional horizontal plane, the arms being mounted to the body in a slideable fashion so as to effect the movement.

In that way, the device can be provided with sufficient ground clearance to traverse rough ground and sufficient breadth between the tracks to provide stability when the machine is in position or travelling across difficult terrain.

Most preferably, the arms comprise a telescopic arrangement. Where the arms comprise a telescopic arrangement, the actuation means is preferably arranged within each respective arm.

The actuation means may comprise a hydraulic or pneumatic ram. Alternatively, the actuation means may comprise an electric motor driving a mechanical actuator. In a further embodiment the actuation means comprises means for actuating the arm manually.

Preferably the angle is in the range of 30-50 degrees and most preferably it is 40 degrees.

The length of the arms and the angle of orientation of the arms is preferably selected in such a way that with one arm fully retracted and the other arm fully extended, the chipper/shredder/combination can be arranged on a slope of at least 10 degrees to the horizontal without tilting of the body.

A self-levelling mechanism can be provided, the self-levelling mechanism comprising means for sensing the angular orientation of the body and control means for driving the respective actuation means so as to maintain the body in a level condition.

The first track laying assembly is preferably pivotally mounted to its respective arm about an axis transverse to the direction of travel and generally parallel with a plane in which the track runs so as to allow the track to pivot relative to the arm when traversing uneven ground. The second track laying assembly is preferably fixed mounted to its arm.

A chipper in accordance with the invention will now be described in detail by way of example and with reference to the accompanying drawings, in which:
Fig. 1 is a side elevation of the chipper in accordance with the invention,
Fig.2 is a part sectional view of the chipper of Fig. 1 taken on line II-II on Fig. 1 with extraneous details deleted for clarity, and
Fig.3 is a view similar to Fig.2 showing one of the arms carrying a track laying assembly fully extended.

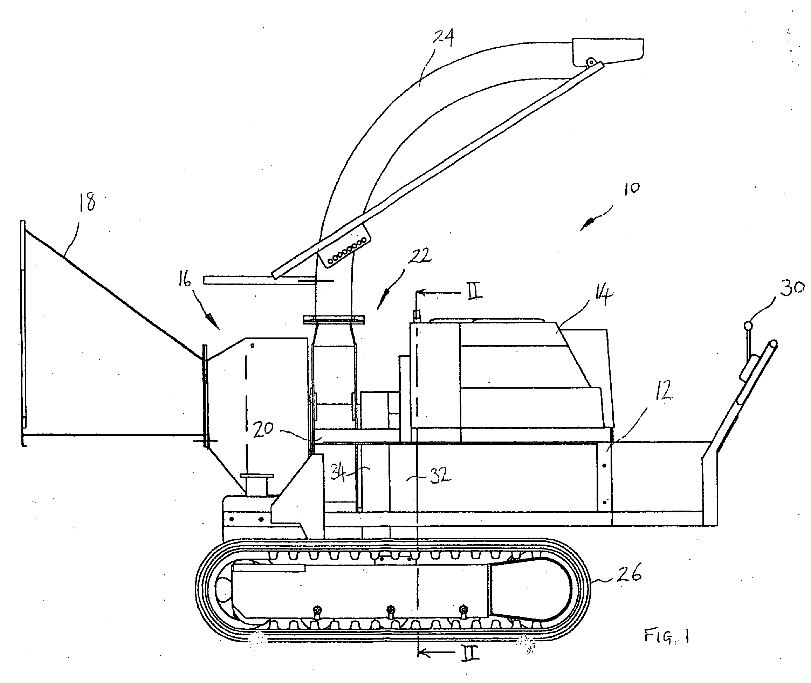

In Fig. 1 a track driven chipper is generally indicated at 10.

The chipper 10 comprises a body 12 which carries an internal combustion engine (not shown) which is covered by an engine cover 14. The internal combustion engine drives a hydraulic motor which, in turn, provides drive to chipper infeed rollers (not shown) of a chipper arrangement 16. The chipper arrangement 16 is known and briefly comprises an infeed chute 18 and feed rollers for feeding in logs and other woody material to be chipped, a flywheel (not shown) mounted upon a drive shaft 20 which is arranged to be driven by the aforesaid internal combustion motor, the flywheel having chipping blades mounted thereupon and being arranged to rotate at high speeds in order to effect chipping of wood inserted through the infeed chute 18. An exhaust mechanism 22 comprises means for generating an airflow which forces chipped material up via a chimney 24 out of the machine, the chimney 24 normally being directed towards a storage container (not shown).

The chipper 10 is mounted upon two track laying assemblies 26, 28, track laying assembly 26 being shown in Fig.1. Each track laying assembly 26, 28 is driven by means of a hydraulic motor. A valve arrangement is provided to switch hydraulic power between the track laying assemblies 26, 28 and the hydraulic motors driving the feed rollers. In addition, a pair of hydraulic actuator levers is provided, one for each track laying assembly 26, 28 so that the chipper 10 can be driven and manoeuvred by relevant control of tracks 26, 28. The hydraulic levers are shown at 30.

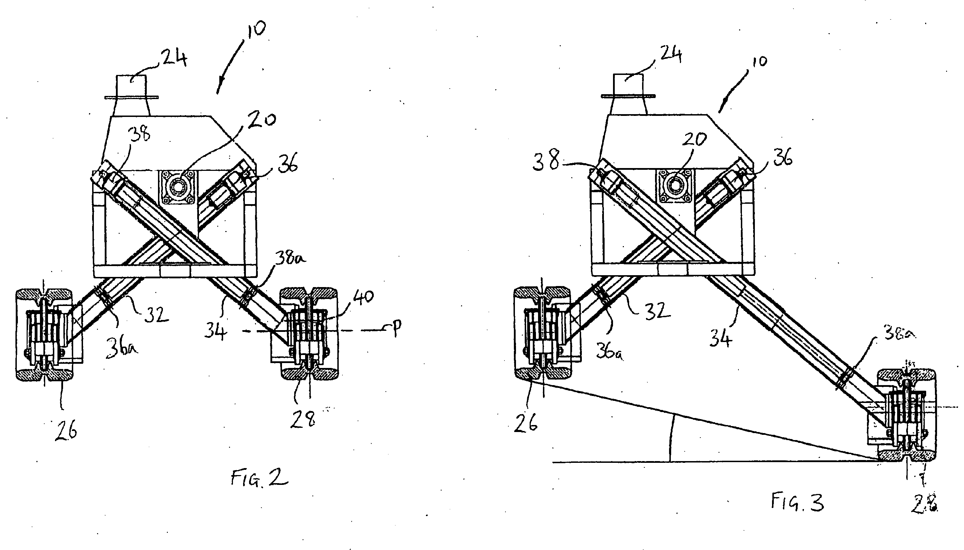

The track laying assemblies 26, 28 are carried by respective telescopically extendible arms 32, 34 (see Figs.2 and 3).

In Figs.2 and 3 a part of the chipper 10 is shown in section.

In particular, the track laying assemblies 26, 28 and their respective mounting arms 32, 34 are shown.

As shown in Fig.2, the track laying assembly 26 is carried by arm 32, which arm 32 is telescopically extendible by means of an electric motor 36 driving a mechanical actuator 36a. An electric motor 38 and mechanical actuator 38a are provided within telescopically extendible arm 34 for the same purpose.

Each track laying assembly 26, 28 is driven by the aforementioned hydraulic motor via hydraulic pipework (not shown) which runs along the respective arms 32, 34. In one embodiment, the hydraulic pipework may be arranged internally of the arms 32, 34.

The track laying assembly 26 is rigidly mounted to the arm 32 at a fixed angle. The arms 32, 34 extend at approximately 40 degrees to the horizontal.

The track laying assembly 28 is pivotally mounted to the arm 34 via pivotal mounting 40 so as to pivot about the axis P as shown in Fig.2. That arrangement means that the track laying assembly 28 is always flat on the ground so as to provide greater traction while the rigid mounting of the track laying assembly 26 provides stability to the chipper.

In Fig.3 indicates the maximum stability configuration with arm 34, which carries track laying assembly 28, fully telescopically extended whilst the arm 32 carrying track laying assembly 26 is fully retracted. As can be seen in Fig.3, the configuration of arms 32, 34, their angle of orientation and telescopic extent means that the chipper 10 can be arranged on a slope of approximately 12 degrees without the orientation of the body being affected. In this position the angle at which the chipper would roll exceeds 60 degrees from the horizontal. The angled nature of the arms 32, 34 also means that where greater ground clearance is required, extending both sets of arms will provide that necessary clearance.

It is envisaged that a self-levelling mechanism could be provided. The self-levelling mechanism comprises means for sensing the angle of orientation of the body 12 of the chipper 10 and control means to control the electric motors 36, 38 of the arms 32, 34 respectively so as to actuate the motors in such a way that the body 10 may be maintained level when traversing rough ground. The sensor for sensing the orientation of the body 12 may comprise a gyroscopic sensor and the control means may comprise a microprocessor control for the respective motors.

Although the invention has been described in detail in the context of a chipper 10, it can equally apply to a shredder or a combined chipper and shredder.

In use, as the drive for the tracks is independent of the actuation means for the arms, it is possible to alter the telescopic extension of the arms while the tracks are driving the chipper. That provides the possibility for self-levelling. Alternatively, the operator can adjust the extension and/or retraction of the arms while operating the drive controls of the tracks manually.

## Claims

1. A wood chipper, shredder for brushwood or combined wood chipper and shredder for brushwood (10) having a body (12), a first track laying assembly (26) and a second track laying assembly (28) spaced apart from the first track laying assembly in a direction transverse to the running direction of the track to define a track distance, each track laying assembly being carried by a respective arm (32, 34), the arms being moveably mounted to the body, and actuation means (36, 36a, 38, 38a) for moving the respective arms so as to move the respective track laying assemblies relative to the body, the movement of the assemblies relative to the body being such that the ground clearance of the body and the track distance between the track laying assemblies are adjustable, **characterised in that** each arm is arranged relative to a notional horizontal plane of the body at a fixed angle in a range of 10-60° degrees relative to the notional horizontal plane, the arms being mounted to the body in a slideable fashion so as to effect the movement.

2. A wood chipper, shredder for brushwood or combined wood chipper and shredder for brushwood according to claim 1 in which the arms (32, 34) comprise a telescopic arrangement.

3. A wood chipper, shredder for brushwood or combined wood chipper and shredder for brushwood according to claim 2 in which the actuation means (36, 36a, 38, 38a) is arranged within each respective arm.

4. A wood chipper, shredder for brushwood or combined wood chipper and shredder for brushwood according to any preceding claim in which the angle is in the range of 30-50 degrees.

5. A wood chipper, shredder for brushwood or combined wood chipper and shredder for brushwood according to any preceding claim in which the angle is 40 degrees.

6. A wood chipper, shredder for brushwood or combined wood chipper and shredder for brushwood according to any preceding claim in which the length of the arms (32, 34) and the angle of orientation of the arms is selected in such a way that with one arm fully retracted and the other arm fully extended, the chipper/shredder/combination can be arranged on a slope of at least 10 degrees to the horizontal without tilting of the body.

7. A wood chipper, shredder for brushwood or combined wood chipper and shredder for brushwood according to any preceding claim in which a self-levelling mechanism is provided, the self-levelling mechanism comprising means for sensing the angular orientation of the body and control means for driving the respective actuation means so as to maintain the body in a level condition.

8. A wood chipper, shredder for brushwood or combined wood chipper and shredder for brushwood according to any preceding claim in which the first track laying assembly (26) is pivotally mounted to its respective arm (32) about an axis (P) transverse to the direction of travel and generally parallel with a plane in which the track runs so as to allow the track to pivot relative to the arm when traversing uneven ground.

9. A wood chipper, shredder for brushwood or combined wood chipper and shredder for brushwood according to claim 8 in which the second track laying assembly (28) is fixedly mounted to its arm (34).

10. A wood chipper, shredder for brushwood or combined wood chipper and shredder for brushwood according to any preceding claim in which the actuation means comprises a hydraulic or pneumatic ram.

11. A wood chipper, shredder for brushwood or combined wood chipper and shredder for brushwood according to any of claims 1 to 10 in which the actuation means comprises an electric motor (36, 38) driving a mechanical actuator(36a, 38a).

12. A wood chipper, shredder for brushwood or combined wood chipper and shredder for brushwood according to any of claims 1 to 10 in which the actuation means comprises means for actuating the arm manually.

## Patentansprüche

1. Holzhäcksler, Zerkleinerer für Unterholz oder kombinierter Holzhäcksler und Zerkleinerer für Unterholz (10), aufweisend einen Körper (12), eine erste Raupenanordnung (26) und eine zweite Raupenanordnung (28), welche von der ersten Raupenanordnung in einer zu der Laufrichtung der Raupe transversalen Richtung beabstandet ist, um einen Spurabstand zu definieren, wobei jede Raupenanordnung mittels eines jeweiligen Arms (32, 34) gestützt wird, wobei die Arme bewegbar an dem Körper montiert sind, und Betätigungsmittel (36, 36a, 38, 38a) zum Bewegen der jeweiligen Arme, um die jeweiligen Raupenanordnungen relativ zu dem Körper zu bewegen, wobei die Bewegung der Anordnungen relativ zu dem Körper derart ist, dass die Bodenfreiheit des Körpers und der Spurabstand zwischen den Raupenanordnungen einstellbar sind, **dadurch gekennzeichnet, dass** jeder Arm relativ zu einer fiktiven horizontalen Ebene des Körpers bei einem festen Winkel in einem Bereich von 10 - 60° relativ zu der fiktiven horizontalen Ebene angeordnet ist, wobei die Arme an dem Körper auf eine verschiebbare Art und Weise montiert sind, um die Bewegung herbeizuführen.

2. Holzhäcksler, Zerkleinerer für Unterholz oder kombinierter Holzhäcksler und Zerkleinerer für Unterholz gemäß Anspruch 1, wobei die Arme (32, 34) eine teleskopische Gestaltung umfassen.

3. Holzhäcksler, Zerkleinerer für Unterholz oder kombinierter Halzhäcksler und Zerkleinerer für Unterholz gemäß Anspruch 2, wobei das Betätigungsmittel (36, 36a, 38, 38a) innerhalb jedes jeweiligen Armes angeordnet ist.

4. Holzhäcksler, Zerkleinerer für Unterholz oder kombinierter Holzhäcksler und Zerkleinerer für Unterholz gemäß einem vorhergehenden Anspruch, wobei der Winkel in einem Bereich von 30 - 50° liegt

5. Holzhäcksler, Zerkleinerer für Unterholz oder kombinierter Holzhäcksler und Zerkleinerer für Unterholz gemäß jedem vorhergehenden Anspruch, wobei der Winkel 40° beträgt.

6. Holzbäcksler, Zerkleinerer für Unterholz oder kombinierter Holzhäcksler und Zerkleinerer für Unterholz gemäß einem vorhergehenden Anspruch, wobei die Länge der Arme (32, 34) und der Winkel der Orientierung der Arme in einer Art und Weise selektiert sind, dass, sofern ein Arm voll eingefahren und der andere Arm von ausgefahren ist, der Häcksler/Zerkleinerer/die Kombination an einem Hang mit zumindest 10° zur Horizontalen angeordnet sein kann, ohne den Körper zu kippen.

7. Holzhäcksler, Zerkleinerer für Unterholz oder kombinierter Holzhäcksler und Zerkleinerer für Unterholz gemäß einem vorhergehenden Anspruch, wobei ein selbstregulierender Mechanismus bereitgestellt ist, wobei der selbstregulierende Mechanismus Mittel zum Erkennen der winkeligen Orientierung des Körpers und Steuermittel zum Antreiben des jeweiligen Betätigungsmittels umfasst, um den Körper in einem Niveauzustand zu erhalten.

8. Holzhäcksler, Zerkleinerer für Unterholz oder kombinierter Holzhäcksler und Zerkleinerer für Unterholz gemäß einem vorhergehenden Anspruch, wobei die erste Raupenanordnung (26) bezüglich seines jeweiligen Arms (32) schwenkbar um eine Achse (P) montiert ist, transversal zu der Fahrtrichtung und im Allgemeinen parallel mit einer Ebene, in welcher die Raupe läuft, um es der Raupe zu ermöglichen, relativ zu dem Arm zu schwenken, bei der Traversierung ungleichmäßigen Untergrunds.

9. Holzhäcksler, Zerkleinerer für Unterholz oder kombinierter Holzhäcksler und Zerkleinerer für Unterholz gemäß Anspruch 8, wobei die zweite Raupenanordoung (28) fest an ihrem Arm (34) montiert ist.

10. Holzhäcksler, Zerkleinerer für Unterholz oder kombinierter Holzhäcksler und Zerkleinerer für Unterholz gemäß einem vorhergehenden Anspruch, wobei das Betätigungsmittel einen Hydraulikkolben oder Pneumatikkolben umfasst.

11. Holzhäcksler, Zerkleinerer für Unterholz oder kombinierter Holzhäcksler und Zerkleinerer für Unterholz gemäß einem der Ansprüche 1 bis 10, wobei das Betätigungsmittel einen elektrischen Motor (36, 38) umfasst, antreibend einen mechanischen Aktuator (36a, 38a).

12. Holzhäcksler, Zerkleinerer für Unterholz oder kombinierter Holzhäcksler und Zerkleinerer für Unterholz gemäß einem der Ansprüche 1 bis 10, wobei das Betätigungsmittel Mittel zum manuellen Betätigen des Arms umfasst.

## Revendications

1. Hacheur de bois, broyeur de bois ou hacheur et broyeur combinés pour des branchages (10), comportant un châssis (12), un premier ensemble à chenille (26) et un second ensemble à chenille (28) écarté du premier ensemble à chenille dans la direction transversale de la direction de déplacement pour définir un écartement des chenilles, chaque ensemble à chenille étant porté par un bras (32, 34) respectif et les bras sont montés de manière mobile par rapport au châssis, ainsi que des moyens d'actionnement (36, 36a, 28, 28a) pour déplacer les bras respectifs de façon à déplacer les chenilles par rapport au châssis, le mouvement des ensembles par rapport au châssis étant tel que la garde au sol du châssis et la distance entre les ensembles de chenille soient réglables,
**caractérisé en ce que**
chaque bras est disposé par rapport à un plan horizontal de référence du châssis suivant un angle fixe dans une plage de 10° à 60° par rapport au plan horizontal de référence, les bras étant montés sur le châssis de façon à coulisser pour leur mouvement.

2. Hacheur de bois, broyeur de bois ou hacheur et broyeur combinés selon la revendication 1,
**caractérisé en ce que**
les bras (32, 34) ont un montage télescopique.

3. Hacheur de bois, broyeur de bois ou hacheur et broyeur combinés selon la revendication 2,
**caractérisé en ce que**
les moyens d'actionnement (36, 36a, 38, 38a) sont disposés dans chaque bras respectif.

4. Hacheur de bois, broyeur de bois ou hacheur et broyeur combinés selon l'une des revendications précédentes,
**caractérisé en ce que**
l'angle est situé dans une plage de 30° à 50°.

5. Hacheur de bois, broyeur de bois ou hacheur et broyeur combinés selon l'une des revendications précédentes,
**caractérisé en ce que**
l'angle est de 40°.

6. Hacheur de bois, broyeur de bois ou hacheur et broyeur combinés selon l'une des revendications précédentes,
**caractérisé en ce que**
la longueur des bras (32, 34) et l'angle d'orientation des bras est choisi de façon qu'une disposition avec un bras complètement rétracté et l'autre complètement déployé, permet de disposer la combinaison hacheur/broyeur, suivant une pente d'au moins 10° par rapport à la direction horizontale sans que le châssis ne soit basculé.

7. Hacheur de bois, broyeur de bois ou hacheur et broyeur combinés selon l'une des revendications précédentes,
**caractérisé par**
un mécanisme de mise à niveau automatique, comportant des moyens pour détecter l'orientation angulaire du châssis et des moyens de commande pour entraîner les moyens d'actionnement respectifs de façon à maintenir le corps du châssis à niveau.

8. Hacheur de bois, broyeur de bois ou hacheur et broyeur combinés selon l'une des revendications précédentes,
**caractérisé en ce que**
le premier ensemble à chenille (26) est monté pivotant sur le bras respectif (32) autour d'un axe (P) transversal à la direction de cheminement et de façon générale parallèle au plan de circulation pour permettre au train de roulement de pivoter par rapport au bras au passage d'un terrain irrégulier.

9. Hacheur de bois, broyeur de bois ou hacheur et broyeur combinés selon la revendication 8,
**caractérisé en ce que**
le second ensemble à chenille (28) est monté de manière fixe sur son bras (34).

10. Hacheur de bois, broyeur de bois ou hacheur et broyeur combinés selon l'une des revendications précédentes,
**caractérisé en ce que**
le moyen d'actionnement se compose d'un vérin hydraulique ou pneumatique.

11. Hacheur de bois, broyeur de bois ou hacheur et broyeur combinés selon l'une des revendications 1 à 10,
**caractérisé en ce que**
le moyen d'actionnement comporte un moteur électrique (36, 38) entraînant un actionneur mécanique (36a, 38a).

12. Hacheur de bois, broyeur de bois ou hacheur et broyeur combinés selon l'une des revendications 1 à 10,
**caractérisé en ce que**
le moyen d'actionnement comporte un moyen d'actionnement manuel du bras.
